# EUROPÄISCHE PATENTSCHRIFT

(11) **EP 1 114 759 B1**
(45) Veröffentlichungstag und Bekanntmachung des Hinweises auf die Patenterteilung: **24.09.2003**
(21) Anmeldenummer: 00127949.6
(22) Anmeldetag: 21.12.2000
(51) Int. Cl.: B60R 21/28

(54) **Fahrzeuginsassen-Rückhaltesystem**
Vehicle occupant restraint system
Système de retenue pour les occupants d'un véhicule

(30) Priorität: 05.01.2000 DE 20000144 U
(43) Veröffentlichungstag der Anmeldung: 11.07.2001
(73) Patentinhaber: TRW Occupant Restraint Systems GmbH & Co. KG, 73553 Alfdorf (DE)
(72) Erfinder: Heilig, Alexander, 73550 Wissgoldingen (DE)
(74) Vertreter: Sties, Jochen, Dipl.-Ing.

(56) Entgegenhaltungen:
- DE-A- 3 147 780
- DE-A- 19 628 836
- DE-U- 29 907 607
- US-A- 3 532 360

## Beschreibung

Die Erfindung betrifft ein Fahrzeuginsassen-Rückhaltesystem. Bei derartigen Rückhaltesystemen wird der Gassack zunächst in möglichst kurzer Zeit vollständig aufgeblasen. Damit der Gassack möglichst viel kinetische Energie vom Fahrzeuginsassen aufnehmen kann, ist das Ventil vorgesehen, durch welches das Gas kontrolliert wieder entweichen kann. Das Ventil sollte dabei in etwa eine Kennlinie mit negativem Koeffizienten aufweisen, d.h. je schwerer der Fahrzeuginsasse, desto kleiner sollte die ausströmende Gasmenge pro Zeiteinheit sein, damit der schwere Fahrzeuginsasse mit einer großen Kraft zurückgehalten wird, während bei einem leichten Fahrzeuginsassen, der mit einer geringeren Kraft gebremst werden muß, der Gassack schneller "weich" werden soll. Rückhaltesysteme mit einem derartigen Ventil sind in verschiedenen Ausführungen bekannt, wobei meist im Gassack eine Öffnung angebracht ist, die abhängig vom Innendruck verkleinert wird. So lehrt etwa die EP 0 917 994 einen Gassack mit einer Öffnung, die von einer Schlinge umgeben ist. Beim Ansteigen des Innendrucks dehnt sich der Gassack, die Schlinge zieht sich zu und verringert den Querschnitt der Öffnung. Eine andere Variante offenbart die DE l9 33 883 A1. Hier ist die Öffnung im Gassack durch ein Gewebeteil mit geringerer Dehnbarkeit abgedeckt, so daß bei einer hohen Spannung im Gassackgewebe die Öffnung verschlossen wird. Bevor diese Ventile schließen, muß allerdings ein Mindestwert des statischen Drucks erreicht sein, so daß in der Anfangsphase des Aufblasens eine Menge an Gas aussströmen kann, die dann nicht mehr zur Füllung des Gassackes zur Verfügung steht. Damit wird aber die Aufblaszeit verlängert. Eine etwas andere Lösung zeigt die EP 0 917 995, bei der die Öffnung im Gassack mit einem Gewebeteil überspannt ist, das sich beim Durchströmen von Gas napfartig auswölbt und dabei seinen Rand zusammenzieht, so daß die Öffnung verkleinert wird. Auch hier ist zur Funktion das Durchströmen einer Gasmenge erforderlich, die dann für das Aufblasen verloren ist.

Die DE 196 28 836 A1 zeigt ein Gassackmodul mit einer Auslaßöffnung, die mit zunehmendem Innendruck ihren Durchflußquerschnitt verringert. In der DE 3 147 780 A1 und in der US 3,532,360 sind jeweils Gasgeneratoren mit einem Überdruckventil beschrieben. Die DE 299 07 607 U1 zeigt ein Rückhaltesystem, mit einem Ventil, das eine Ausströmöffnung verschließen kann. Die Klappen des Ventils werden vom einströmenden Gasstrom von der Druckgasquelle verschwenkt und das Ventil damit geschlossen. Nach Beendigung des Einströmens schwenken die Klappen zurück und geben die Ausströmöffnung wieder völlig frei.

Die Erfindung hat zur Aufgabe, ein Fahrzeuginsassen-Rückhaltesystem der eingangs genannten Art dahingehend zu verbessern, daß die vom Gasgenerator zur Verfügung gestellte Gasmenge optimal zum Aufblasen des Gassackes genutzt werden kann.

Dies wird durch ein Fahrzeuginsassen-Rückhaltesystem mit den Merkmalen des Anspruchs 1 erreicht. Da die Druckgasquelle nach der Zündung den höchsten Strömungsdruck liefert, hat das Ventil, wenn es von dem Gasstrom getroffen . wird, kurz nach dem Auslösen den geringsten Durchflußquerschnitt, so daß wenigstens zu Beginn des Aufblasvorgangs kaum Gas verloren geht. Dadurch ist ein schnellstmögliches Aufblasen des Gassackes gewährleistet.

Eine Ausführungsform der Erfindung sieht vor, daß die Kennlinie des Ventils einstellbar ist. Damit kann durch einfache Einstellung des Ventils eine Anpassung der Gasmenge an den verwendeten Gassack erfolgen, so daß Druckgasquellen derselben Bauart für verschiedene Gassäcke Verwendung finden können. Außerdem kann eingestellt werden, wie stark der Gassack aufgeblasen werden soll, etwa in Abhängigkeit von der Position oder dem Gewicht des Fahrzeuginsassen, wenn eine entsprechende Erfassungseinrichtung vorhanden ist.

Gemäß der bevorzugten Ausführungsform der Erfindung ist die Druckgasquelle ein Gasgenerator und das Ventil in den Gasgenerator integriert. Damit wird zum einen die Herstellung des Gassackes vereinfacht, da dort keine Entlastungsöffnungen vorgesehen werden müssen; zum anderen ist der Strömungsweg zwischen dem Gasgenerator und dem Ventil minimiert, so daß das Ventil schnellstmöglich reagieren kann.

Vorteilhafte Ausgestaltungen der Erfindung ergeben sich aus den Unteransprüchen.

Weitere Ausgestaltungen und Vorteile der Erfindung ergeben sich aus der nachfolgenden Beschreibung unter Bezug auf die beigefügte einzige Zeichnung, in der ein Querschnitt durch ein erfindungsgemäßes Fahrzeuginsassen-Rückhaltesystem gezeigt ist.

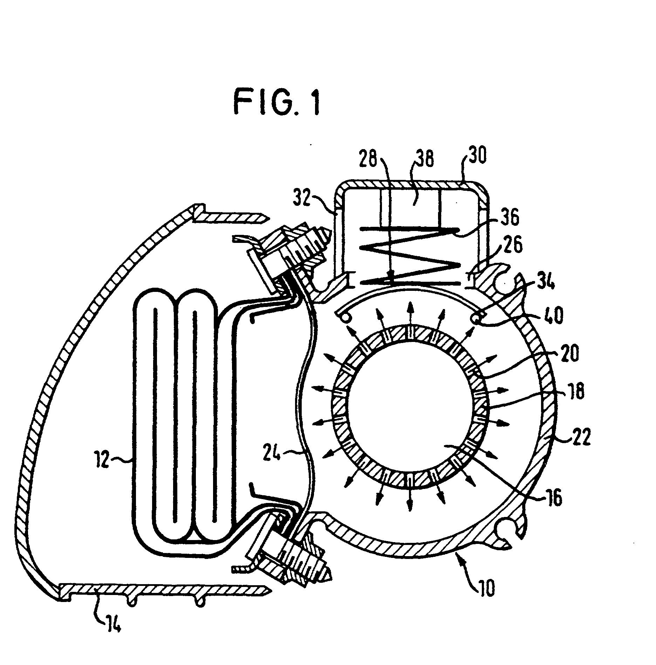

In Fig. 1 ist ein erfmdungsgemäßes Fahrzeuginsassen-Rückhaltesystem bestehend aus einem Gasgenerator 10, einem Gassack 12 und einer Gassackabdeckung 14 im Querschnitt zu sehen. Der Gasgenerator 10 hat eine Brennkammer 16, die durch eine Brennkammerwand 18 abgeschlossen ist. In der Brennkammerwand 18 befinden sich radial angeordnete Ausströmöffnungen 20. Der Gasgenerator 10 weist weiterhin ein Gehäuse 22 auf, welches zum Gassack 12 hin offen ist. Ein Filter 24 schützt den Gassack vor heißen Verbrennungsrückständen. Im Gehäuse 22 ist eine Öffnung 26 vorgesehen, welche von einem Ventil 28 verschlossen werden kann. Über der Öffnung 26 ist an der Außenseite des Gehäuses 22 eine Abdeckkappe 30 mit seitlichen Öffnungen 32 angebracht. Das Ventil 28 besteht aus einer Anströmplatte 34 und einer Feder 36. Die Feder 36 stützt sich über ein Stellglied 38 an der Abdeckkappe 30 ab. Die Strömungsplatte 34 wird von der Feder 36 gegen zwei Anschläge 40 im Gasgeneratorgehäuse 22 gedrückt.

Nach dem Zünden des Gasgenerators entsteht im Brennraum 16 ein Gas, welches durch die Ausströmöffnungen 20 mit hoher Geschwindigkeit austritt. Ein Teil der Gasströmung trifft auf die Strömungsplatte 34, welche durch den Strömungsdruck entgegen der Kraft der Feder 36 zum Gehäuserand 22 bewegt wird und die Öffnung 26 verschließt. Das Gas strömt damit in den Gassack 12, welcher sich in üblicher Weise entfaltet. Wenn die Gaserzeugung beendet ist, d. h. wenn der Brennstoff in der Brennkammer verbraucht ist, läßt die Gasströmung nach, und die Feder 36 öffnet das Ventil, so daß die Öffnung 26 wieder freigegeben wird. Damit kann das Gas aus dem Gassack 12 durch die Öffnung 26 und die Öffnungen 32 in der Abdeckkappe 30 entweichen. Somit wird der Gassack 12 nachgebig, und der Fahrzeuginsasse kann seine kinetische Energie durch Beschleunigen des im Gassack 12 befindlichen Gases abgeben.

Mit dem Stellglied 38 kann die Vorspannung der Feder 36 verändert werden. Durch eine höhere Vorspannung der Feder 36 wird erreicht, daß das Ventil 28 schon bei einem höheren Strömungsdruck wieder öffnet, d.h. also während des Aufblasvorganges früher, so daß der Gassack 12 nicht so stark gefüllt wird, etwa wenn ein leichterer Fahrzeuginsasse abgefangen werden soll.

Während des Rückhaltevorganges, d.h. wenn das Ventil 28 wieder geöffnet ist und das Gewicht des Fahrzeuginsassen das Gas aus dem Gassack 12 drückt, existiert eine Gasströmung durch die Öffnung 26, wobei die effektive Durchströmöffnung des Ventils 28 sich in Abhängigkeit von dem Gasstrom durch die Öffnung 26 und der Federkraft der Feder 36 einstellt. Dies hat zur Folge, daß wie gewünscht der Gassack 12 bei einem leichten Fahrzeuginsassen schneller "weich" wird als bei einem schweren. Das Ventil 28 arbeitet dann wie die bekannten veränderlichen Ausströmöffnungen als Ventil mit Kennlinie mit negativem Koeffizienten.

Da die Funktion und insbesondere das erzeugte Gasvolumen des Gasgenerators 10 von der Umgebungstemperatur im Fahrzeug abhängig ist, kann dem Ventil 28 eine temperaturabhängige Kennlinie eingeprägt werden, um eine gleichbleibende Rückhaltefunktion des Systems zu gewährleisten. Dies kann beispielsweise dadurch erreicht werden, daß ein temperaturabhängiges Federmaterial für die Feder 36 gewählt wird. Alternativ ist auch denkbar, die Vorspannung der Feder 36 durch das Stellglied 38 in Abhängigkeit von der Umgebungstemperatur einzustellen, die mittels eines externen Sensors erfaßt wird, wie er meist im Fahrzeug sowieso vorhanden ist.

Selbstverständlich ist die Erfindung nicht auf die in den Figuren gezeigte Ausführungsform beschränkt. Das strömungsabhängige Ventil kann genausogut an anderer Stelle angebracht sein, wo es von der Gasströmung getroffen wird. Beispielsweise könnten Gassack und Gasgenerator aus Platzgründen getrennt und durch eine Leitung verbunden sein.

Für bestimmte Anwendungsfälle kann es sinnvoll sein, die Funktion des Ventils abzuschalten, etwa in Verbindung mit einer Überwachung anderer Rückhaltesysteme wie beispielsweise Sicherheitsgurte.

Eine weitergehende Anpassung an die jeweilige Rückhaltesituation (abhängig vom Insassengewicht, von der Position des Fahrzeuginsassen, etc.) kann auch dadurch erreicht werden, daß das Ventil mit einem Zeitglied versehen wird, welches es gestattet, das Ventil zeitverzögert zu öffnen oder zu schließen, oder es aktiv zu öffnen oder zu schließen, bevor es auf den Gasstrom reagiert. Wenn festgestellt wird, daß sich der Fahrzeuginsasse nicht in der optimalen Sitzposition befindet, weil er sich beispielsweise gerade nach vorne beugt, dann kann mittels des Zeitglieds das Ventil später geschlossen werden. Dadurch wird die Wucht des Aufblasvorgangs vermindert, da ein Teil des Gasstromes durch das Ventil entweichen kann. Dies verlängert zwar die Zeitdauer bis der Gassack vollständig aufgeblasen ist, verringert aber die Gefahr, daß der Fahrzeuginsasse durch die Wucht des Gassackes zusätzliche Verletzungen erleidet.

Mit relativ einfachen Mitteln kann eine bestimmte Charakteristik des Ventils auch durch Veränderung des Feder-Massesystems erreicht werden, wenn die träge Masse beispielsweise des Strömungsbleches berücksichtigt wird.

## Patentansprüche

1. Fahrzeuginsassen-Rückhaltesystem mit einer Druckgasquelle (10), mit. einem Gassack (12), der mit Druckgas, das von einer Druckgasquelle geliefert wird, aufgeblasen werden kann, wobei die Druckgasquelle einen ersten Gasstrom erzeugt, und einem Ventil (28), durch welches das Gas aus dem Rückhaltesystem in einem zweiten Gasstrom entweichen kann, wobei das Ventil so angeordnet ist, daß es sowohl von dem ersten als auch von dem zweiten Gasstrom getroffen wird, und das Ventil seinen Durchflußquerschnitt mit zunehmendem Strömungsdruck des ersten, wie auch des zweiten Gasstroms verringert.

2. Fahrzeuginsassen-Rückhaltesystem nach Anspruch 1, **dadurch gekennzeichnet, daß** die Kennlinie des Ventils (28) einstellbar ist.

3. Fahrzeuginsassen-Rückhaltesystem nach Anspruch 1 oder 2, **dadurch gekennzeichnet, daß** die Kennlinie des Ventils (28) temperaturabhängig ist.

4. Fahrzeuginsassen-Rückhaltesystem nach einem der vorhergehenden Ansprüche, **dadurch gekennzeichnet, daß** eine Vorrichtung vorgesehen ist, welche das Schließen des Ventils (28) zeitlich verzögert.

5. Fahrzeuginsassen-Rückhaltesystem nach einem der vorhergehenden Ansprüche, **dadurch gekennzeichnet, daß** eine Vorrichtung vorgesehen ist, welche das Öffnen des Ventils (28) zeitlich verzögert.

6. Fahrzeuginsassen-Rückhaltesystem nach einem der vorhergehenden Ansprüche, **dadurch gekennzeichnet, daß** die Druckgasquelle ein Gasgenerator (10) ist und daß das Ventil (28) in den Gasgenerator integriert ist.

7. Fahrzeuginsassen-Rückhaltesystem nach einem der vorhergehenden Ansprüche, **dadurch gekennzeichnet, daß** das Ventil (28) außer Betrieb gesetzt werden kann.

8. Fahrzeuginsassen-Rückhaltesystem nach einem der vorhergehenden Ansprüche, **dadurch gekennzeichnet, daß** das Ventil (28) eine Platte (34) aufweist, welche durch den Strömungsdruck des Gasstroms aus einer Öffnungsstellung, in welcher die Platte eine Durchströmöffnung (26) des Ventils Freigibt, in eine Schließstellung, in welcher sie die Durchströmöffnung verschließt, verlagert werden kann.

9. Fahrzeuginsassen-Rückhaltesystem nach einem der vorhergehenden Ansprüche, **dadurch gekennzeichnet, daß** die Platte (34) von wenigstens einer Feder (36) in die Öffnungsstellung beaufschlagt ist.

## Claims

1. A vehicle occupant restraint system comprising a compressed gas source (10), a gas bag (12) inflatable by compressed gas furnished by a compressed gas source, the compressed gas source generating a first gas flow, and comprising a valve (28) through which the gas is able to escape from the restraint system in a second gas flow, the valve being arranged such that it is impacted by both the first and the second gas flow, and the valve reducing its flow cross-section with increasing flow pressure of both the first and the second gas flow.

2. The vehicle occupant restraint system as set forth in claim 1, **characterized in that** the characteristic of the valve (28) is adjustable.

3. The vehicle occupant restraint system as set forth in claim 1 or 2, **characterized in that** the characteristic of the valve (28) is temperature-dependent.

4. The vehicle occupant restraint system as set forth in any of the preceding claims, **characterized in that** a device is provided for delaying closure of the valve (28).

5. The vehicle occupant restraint system as set forth in any of the preceding claims, **characterized in that** a device is provided for delaying opening of the valve (28).

6. The vehicle occupant restraint system as set forth in any of the preceding claims, **characterized in that** the compressed gas source is an inflator (10) and that the valve (28) is integrated in the inflator.

7. The vehicle occupant restraint system as set forth in any of the preceding claims, **characterized in that** the valve (28) may be deactivated.

8. , The vehicle occupant restraint system as set forth in any of the preceding claims, **characterized in that** the valve (28) comprises a plate (34) able to be shifted by the gas flow pressure from an open position, in which the plate opens a flow-through opening (26) of the valve, into a closed position, in which it closes the flow-through opening.

9. The vehicle occupant restraint system as set forth in any of the preceding claims, **characterized in that** the plate (34) is biased into the open position by at least one spring (36).

## Revendications

1. Système de retenue des occupants d'un véhicule comportant une source de gaz sous pression (10), un coussin à gaz (12) qui peut être gonflé avec du gaz sous pression qui est fournit par une source de gaz sous pression, la source de gaz sous pression engendrant un premier flux de gaz, et une soupape (28) à travers laquelle le gaz peut s'échapper hors du système de retenue dans un deuxième flux de gaz, la soupape étant agencée de façon à être atteinte tant par le premier flux de gaz que par le deuxième flux de gaz, et en ce que la soupape réduit sa section de passage avec l'augmentation de la pression d'écoulement du premier ainsi que du deuxième flux de gaz.

2. Système de retenue des occupants d'un véhicule selon la revendication 1, **caractérisé en ce que** la courbe caractéristique de la soupape (28) est réglable.

3. Système de retenue des occupants d'un véhicule selon la revendication 1 ou 2, **caractérisé en ce que** la courbe caractéristique de la soupape (28) dépend de la température.

4. Système de retenue des occupants d'un véhicule selon l'une des revendications précédentes, **caractérisé en ce qu'**il est prévu un dispositif qui diffère dans le temps la fermeture de la soupape (28).

5. Système de retenue des occupants d'un véhicule selon l'une des revendications précédentes, **caractérisé en ce qu'**il est prévu un dispositif qui diffère dans le temps l'ouverture de la soupape (28).

6. Système de retenue des occupants d'un véhicule selon l'une des revendications précédentes, **caractérisé en ce que** la source de gaz sous pression est un générateur de gaz (10) et **en ce que** la soupape (28) est intégrée dans le générateur de gaz.

7. Système de retenue des occupants d'un véhicule selon l'une des revendications précédentes, **caractérisé en ce que** la soupape (28) peut être mise hors service.

8. Système de retenue des occupants d'un véhicule selon l'une des revendications précédentes, **caractérisé en ce que** la soupape (28) présente une plaque (34) qui peut être déplacée par la pression d'écoulement du flux de gaz depuis une position d'ouverture, dans laquelle la plaque libère un orifice de passage (26) de la soupape, jusque dans une position de fermeture dans laquelle elle ferme l'orifice de passage.

9. Système de retenue des occupants d'un véhicule selon l'une des revendications précédentes, **caractérisé en ce que** la plaque (34) est sollicitée par au moins un ressort (36) jusque dans la position d'ouverture. .
